# EUROPEAN PATENT APPLICATION

(11) **EP 1 918 738 A2**
(43) Date of publication of application: **07.05.2008**
(21) Application number: 07119783.4
(22) Date of filing: 31.10.2007
(51) Int. Cl.: G01V 5/00

(54) **Methods for determining a position and shape of a bag placed in a baggage handling container using x-ray image analysis**

(30) Priority: 01.11.2006 US 555450
(71) Applicant: GE Homeland Protection, Inc., Newark CA 94560-1012 (US)
(72) Inventor: Schmiegel, Armin Uwe, 22609, Hamburg (DE)
(74) Representative: Illingworth-Law, William Illingworth

(57) **Abstract**

Disclosed herein are methods (1500, 1600) for configuring and operating an explosive detection system to determine bag contour data (1304) from a pre-scan x-ray "ground truth" image (1300) of a bag that rests within a container. The bag contour data (1304) may be used to restrict a subsequent main x-ray scan to the bag and its contents. The bag contour data (1304) may be determined by calculating probability distributions "P(I)Tub, r/L" for the intensity values "I" and probability distributions "P(E)Tub, r/L" for the entropy values "E" of each pixel of the "ground truth" image. The "ground truth" intensity and entropy probability distribution data can be used to create one or more "ground truth" histograms (900, 1000). Based on a comparison of these one or more "ground truth'' histograms with the one or more statistical model histograms, the "tub" pixels can be extracted (e.g., subtracted) from the "ground truth" image (1300).

## Description

### BACKGROUND

### Field of the Invention

The technology disclosed herein relates to explosive detection systems generally, and more particularly, to a method for determining a position and shape of a bag placed in a baggage handling container using x-ray image analysis.

### Discussion of Related Art

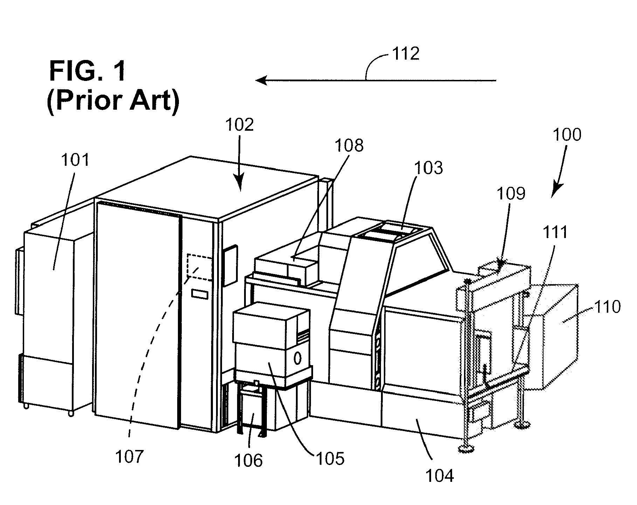

Extant explosive detection systems (EDS) are machines uniquely engineered to examine bags (e.g., luggage, personal accessories, etc.) for the presence of alarm objects (e.g., explosives, weapons, illegal drugs, combinations thereof, etc.). Various types of explosive detection systems are implemented at security checkpoints, such as those found at airports, border crossings, and public buildings, among others. In airport applications, EDS may be implemented as part of the airport's baggage handling system (BHS). Figure 1 illustrates an example of a known type of explosive detection system 100, having a linearly arranged data processor cabinet 101, a main scanner 102, and a pre-scanner 103. The explosive detection system 100 further includes an internal conveyor equipment cabinet 104, a high-voltage generator 105, a cooling unit 106, a motor cooling unit 107, and at least two active shielding curtains 108,109. The EDS 100 may also include an auxiliary cooling unit 110. In operation, a conveyor belt 111 transports a bag, in the following order, past the shielding curtain 109, into the pre-scanner 103, past the shielding curtain 108, and through the main scanner 102. Consequently, in the orientation illustratively shown in Figure 1, bags flow through the EDS 100 from right to left, as indicated by direction arrow 120.

Depending on the type and configuration of an explosive detection system, it may identify alarm objects using x-ray diffraction technology, coherent x-ray scatter (CXRS) technology, and/or computed tomography (CT) technology. X-ray diffraction technology identifies materials based on the interference pattern caused by the uniform spacing of the atoms that form the material upon the waves of an incident x-ray beam. Coherent x-ray scatter (CXRS) technology defines alarm objects based on their molecular composition. Computed Tomography technology identifies alarm objects based on their respective densities.

A problem unsolved by conventional explosive detection systems is their inability to distinguish the contours of a bag from the contours of an open-topped container (called a "tub") in which the bag rests. For example, at a conventional security checkpoint, bags are placed within tubs. Motorized conveyor belts then feed the tubs, with all or most of each bag inside, one-at-a time into the explosive detection systems for inspection. Conventional explosive detection systems cannot distinguish the bags from the tubs, because the intensity distribution for "bag" pixels closely approximates the intensity distribution for "tub" pixels. Accordingly, conventional explosive detection systems x-ray the bags and tubs together in their entireties.

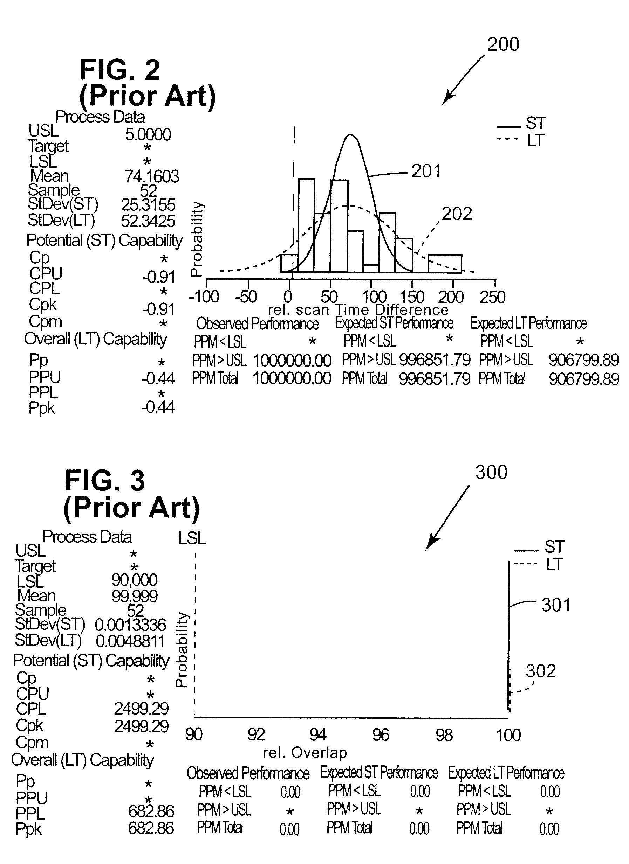

This dual scanning, however, reduces the explosive detection systems' throughput because it takes longer to scan the tub and the bag together than it does to scan only the bag itself. This is illustrated in Figures 2 and 3.

Figure 2 is a histogram 200 that shows scan time differences (e.g., scanning only the bag and its contents instead of the bag and the overlapping tub) of a known bag registration method over a potential (ST) distribution 201 and an actual (LT) distribution 202. In the known method, the mean scan time difference is about 74.1603, which greatly exceeds an upper specification limit (USL) of 5.0000. Figure 3 is a chart 300 that complements the histogram 200 of Figure 2 and shows that the mean scan time difference of about 74.1603 was achieved with a mean overlap of about 99.999. The value of overlap indicates to what extent the incident x-ray beams impinge both the bag itself and portions of the tub that enclose the bag. In this particular example, a mean overlap of about 99.999 indicates that the bag and the portions of the tub surrounding the bag were scanned. In Figure 3, the data 301 represents a potential (ST) distribution, and the data 302 represents an actual (LT) distribution.

Some explosive detection systems have the additional capability of inspecting localized areas of bags that have been identified as suspicious by a previous screening step. Such localized scanning, however, is typically limited to situations where the bags are placed directly on conveyor belts (e.g., not in tubs) that feed the explosive detection systems.

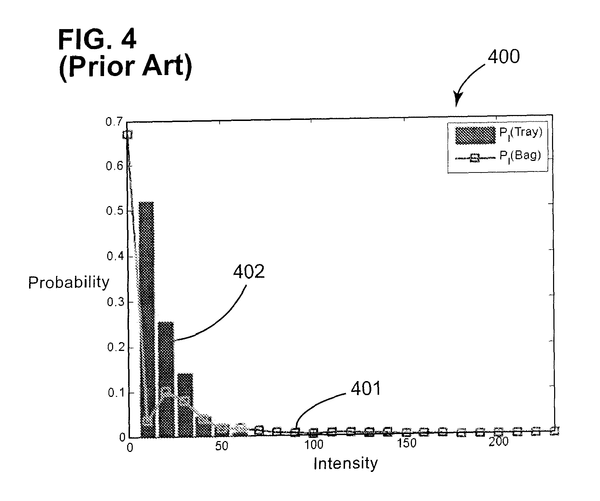

Another problem is that conventional averaging methods, conventional background subtraction methods (such as those used in video detection of alarm objects), or other conventional probabilistic background estimation methods cannot be used to separate "bag" pixels from "tub" pixels in known explosive detection systems. Conventional probabilistic background estimation methods cannot be used because, as previously mentioned, the resulting distributions of the intensities of "bag" pixels and "tub" pixels are too similar. For example, Figure 4 demonstrates these similarities in a histogram 400 created using conventional probabilistic background estimation techniques for "bag" pixel intensity data 401 and "tub" pixel intensity data 402.

It would therefore be desirable to develop one or more novel methods for distinguishing a contour of a bag from a contour of a tub using computer analysis of a pre-scan x-ray image of the bag resting in the tub - irrespective of what orientation the bag and/or the tub each occupy. It would also be desirable to develop one or more novel methods for configuring an explosive detection system to inspect only the bag (and its contents) using bag contour data obtained from the computer analysis of the pre-scan x-ray image.

### BRIEF DESCRIPTION

Embodiments of the invention overcome the disadvantages associated with the related art and meet the needs discussed above by providing novel detection methods for distinguishing a bag contour from a tub contour, and for x-ray scanning the bag (and its contents) when the bag rests in the tub. Such methods are relatively simple, cost-effective, and efficient; and, they provide advantages (such as increased baggage throughput, low false alarm rates, and easy integration with baggage handling systems) that enhance security at airports, border-crossings, jails, seaports, military bases, public buildings, etc.

An embodiment of the invention provides a novel method that includes configuring an explosive detection system to distinguish a contour of a bag from a contour of a tub in which the bag rests. The method further includes obtaining bag contour data from a computer analysis of a pre-scan x-ray image of the bag resting in the tub.

Another embodiment of the invention provides another novel method that includes obtaining an x-ray image of a bag and a container, wherein a portion of the bag rests in the container. This method further includes comparing the x-ray image with a statistical model of a container image and its image properties. This method also includes estimating a likelihood of a pixel of the x-ray image to be one of a "bag" pixel and a "container" pixel.

This brief description has outlined rather broadly the features of embodiments of the invention so that the following detailed description may be better understood. Additional features and advantages of various embodiments of the invention that form the subject matter of the appended claims will be described below.

### BRIEF DESCRIPTION OF THE DRAWINGS

For a more complete understanding of the present invention, and the advantages thereof, reference is now made to the following brief descriptions of embodiments provided by way of example only taken in conjunction with the accompanying drawings, in which:

Figure 1 is a perspective view of an exemplary prior art explosive detection system ("EDS") that may be improved and configured to perform one or more steps of methods provided by embodiments of the invention;

Figure 2 is a histogram illustrating scan time differences of a prior art bag registration method over a potential (ST) distribution and an actual (LT) distribution;

Figure 3 is a chart that complements the prior art histogram of Figure 2 and illustrates a degree to which incident x-ray beams overlap a bag and a container in which the bag is positioned during acquisition of data used to create the histogram of Figure 2;

Figure 4 is a histogram created using conventional probabilistic background estimation techniques for "bag" pixel intensity data and "tub" pixel intensity data;

Figure 5 is an x-ray image of a bag positioned within a tub illustrating one or more contour points that form bag contour data, which defines a shape of the bag and distinguishes "bag" pixels from "tub" pixels, according to an embodiment of the invention;

Figure 6 is a histogram illustrating scan time differences of a bag registration method provided by an embodiment of the invention over a potential (ST) distribution and an actual (LT) distribution;

Figure 7 is a histogram according to an embodiment of the invention that complements the histogram of Figure 6 and illustrates a degree to which incident x-ray beams overlapped a bag and a container in which the bag was positioned during acquisition of data used to create the histogram of Figure 6;

Figure 8 is a diagram illustrating a reference frame for a statistical model used in a method provided by an embodiment of the invention;

Figure 9 is a "ground truth" histogram showing statistical intensity values extracted from a test set of five tubs, according to an embodiment of the invention;

Figure 10 is a "ground truth" histogram that complements the histogram of Figure 9 and shows statistical entropy values extracted from the test set of five tubs, according to an embodiment of the invention;

Figure 11 is a "real" histogram showing statistical intensity values extracted from an x-ray bag image, according to an embodiment of the invention;

Figure 12 is a "real" histogram that complements the histogram of Figure 11 and shows statistical entropy values extracted from the x-ray bag image, according to an embodiment of the invention;

Figure 13 is a "real" x-ray image of a bag inside a tub, according to an embodiment of the invention;

Figure 14 is a "real" histogram illustrating a probability of each pixel in the x-ray image of Figure 13 of being a "tub pixel," according to an embodiment of the invention;

Figure 15 is a flowchart of a method provided by an embodiment of the invention; and

Figure 16 is a flowchart of another method provided by an embodiment of the invention.

### DETAILED DESCRIPTION

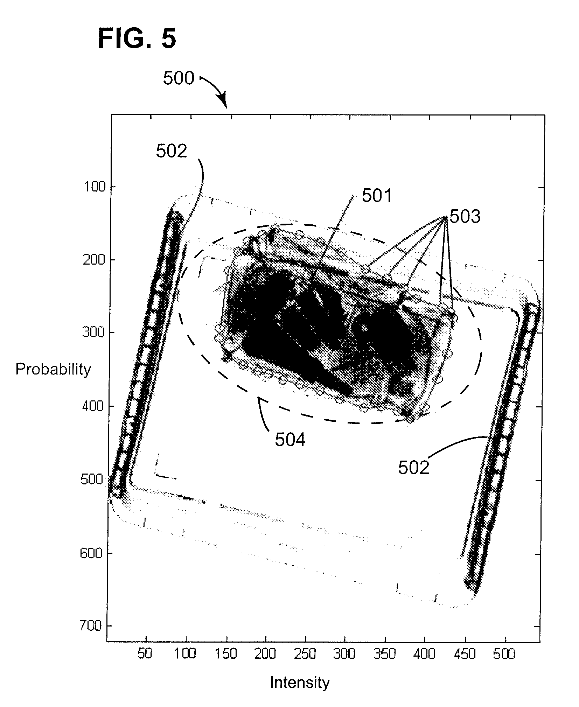

Reference is made herein to the accompanying Figures 5, 6, 7, 8, 9, 10, 11, 12, 13, 14, 15, and 16 (hereinafter, "Figures 5-16") briefly described above, which show by way of illustration various embodiments of the invention. The data shown in Figures 5-16 is exemplary data provided for enablement purposes, and is not intended to limit the scope of any embodiment of the claimed invention. Persons of ordinary skill in the above-referenced technological field will recognize that other embodiments may be utilized, and that various changes may be made to the embodiments depicted in Figures 5-16 without departing from the scope of the claimed invention. Such persons will appreciate that features described with respect to one embodiment may be applied to other embodiments, and that one or more embodiments of the invention may comprise features of one of Figures 5-16 that are combined with features of others of Figures 5-16. Thus, the scope of each embodiment of the invention is to be properly construed with reference to the claims included herein.

As used herein, the singular includes the plural, and the plural includes the singular. Thus, an element or step recited in the singular and proceeded with the word "a" or "an" may include plural elements or steps, unless exclusion of such plural elements or steps is explicitly recited. Furthermore, references to "an embodiment" of the invention include the existence of additional embodiments unless exclusion of such additional embodiments is explicitly recited.

Also as used herein, the phrases "obtaining an x-ray image," "obtaining bag contour data," "comparing the x-ray image," and the like are not intended to exclude embodiments of the invention in which data representing an image is generated but a viewable image is not. Therefore, as used herein the term, "image," broadly refers to both viewable images and data representing a viewable image. However, many embodiments of the invention generate (or are configured to generate) at least one viewable image.

Embodiments of the invention described and claimed herein provide one or more methods for improving scan times for explosive detection systems ("EDS"). Conventional explosive detection systems scan both tubs and bags together at an overlap of about 95% or more, which is very time-consuming. In contrast, embodiments of the invention offer the improvements or advantages of quickly distinguishing "bag" pixels from "tub" pixels in a pre-scan x-ray image, and thereafter restricting a main x-ray scan and/or threat detection analysis to the bag scan volume (and the contents of the bag within the bag scan volume).

Depending on the embodiment, such features can improve throughput (e.g., bags per hour) by as much as about 45% or greater. These improvements and/or advantages may result, in part, from generating a statistical ("ground truth") model of a tub image; storing the statistical model in a computer-readable medium; comparing the statistical model with a pre-scan x-ray image of a tub and a bag that rests within the tub; calculating probability distributions of intensity and entropy for each image pixel; extracting bag contour data from the comparison; and restricting a main x-ray scan to the bag (and the contents within the bag) based on the extracted bag contour data.

Technical effects associated with an embodiment of the invention include, but are not limited to, bag contour data determined from computer analysis of a pre-scan x-ray image, a visual display of the determined bag contour data on a display device, and probability distributions of intensity and entropy for pixels of the pre-scan x-ray image. Another technical effect afforded by an embodiment of the invention is a measurable increase in baggage handling throughput as compared to conventional explosive detection systems. Another technical effect is the ability for a computer processor to quickly and accurately distinguish between a bag and the tub it rests within.

One or more embodiments of the invention are now more fully described with respect Figures 5 to 16.

Figure 5 is a "ground-truth" x-ray image 500 of a (soft) bag 501 positioned within a tub 502. The data comprising the "ground-truth" x-ray image 500 and/or histogram data derived from the "ground truth" x-ray image may be stored in a computer readable memory and used to assist a computer processor in processing a "real" x-ray image to distinguish a bag from a tub that contains it. In an embodiment, a "real" x-ray image is one obtained by an explosive detection system while operating to detect non-test alarm objects.

The "ground-truth" x-ray image 500 may be obtained by running one or more test bags and tubs through the x-ray scanner, and then manually or automatically identifying one or more contour points 503 within the x-ray image(s) that collectively form bag contour data 504. The bag contour data 504 clearly defines a multi-dimensional shape of the bag 501, and thus distinguishes "bag" pixels from "tub" pixels. Data about the probabilities of intensity and entropy for each "bag pixel" and for each "tub pixel" can be calculated and set forth in one or more "ground truth" histograms that are stored in the computer readable memory. Thereafter, a computer processor can calculate the intensity and entropy values of pixels in a "real" x-ray image and use this data to create one or more "real" histograms. The probabilities of intensity and entropy of "bag" pixels and "tub" pixels that are set forth in the one or more "real" histograms may be compared to the probabilities of intensity and entropy of "bag" pixels and "tub" pixels that are set forth in the one or more "ground truth" histograms. Based on this comparison, "bag" pixels in the "real" image can be quickly and accurately determined. Thereafter, a subsequent x-ray scan and/or image processing may be limited to the "bag pixels," which speeds processing times.

Additionally, the bag contour data 504 may include a scan volume comprised of a "hull" of "bag" pixels. As illustratively shown, this hull of "bag" pixels may be convex. In an embodiment, the scan volume may be defined by the bag contour data 504 and the bag's height as measured by a light curtain affixed to an explosive detection system that scans the bag 501. As mentioned above, the one or more contour points 503 may be automatically determined by a computer analysis of the "ground truth" x-ray image 500. Alternatively, an input device, such as a computer mouse, may be used to manually select the one or more contour points 503. In an embodiment, the one or more contour points 503 are ordered in a two-dimensional plane in a clockwise fashion.

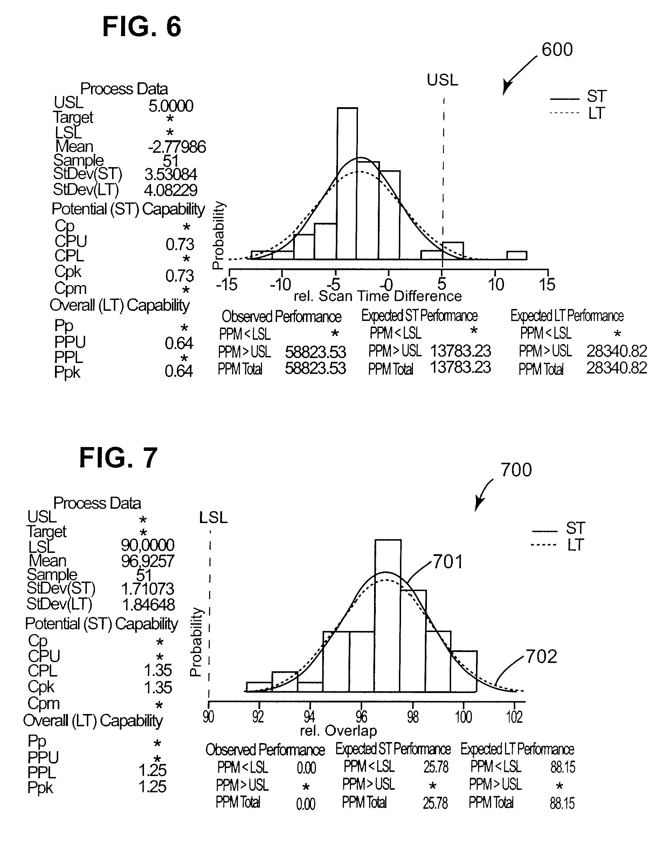

Figure 6 is a histogram 600 illustrating significantly improved scan time differences of a bag registration method provided by an embodiment of the invention over a potential (ST) distribution 601 and an actual (LT) distribution 603. Figure 7 is a histogram 700 according to an embodiment of the invention that complements the histogram 600 of Figure 6 and illustrates a degree to which incident x-ray beams overlap a bag and a tub in which the bag was positioned over a potential (ST) distribution 701 and an actual (LT) distribution 702. In Figures 6 and 7, the term "USL" stands for "upper specification limit," and the term "LSL" stands for "lower specification limit."

As shown in Figure 6, an exemplary mean scan time difference (e.g., scanning only the bag and its contents instead of the bag and the overlapping tub) is about -2.77986, which is below an exemplary USL of about 5.00000. Although experiments may show some scan-time differences that exceed the exemplary USL, this is thought to result only when a small number of pre-scan x-ray images of a bag/tub set are obtained, and is not thought to be representative. That an embodiment of the invention significantly improves scan-time differences for sets of pre-scan x-ray images of a bag/tub set is seen by comparing the exemplary mean scan-time difference of Figure 6 (e.g., -2.77986) to the conventional mean scan-time difference of Figure 2 (e.g., 74.1603). Moreover, as Figure 7 demonstrates, the improved scan-time differences shown in Figure 6 were achieved at an exemplary mean overlap of about 96.9257, which comfortably exceeds the exemplary LSL of about 90.0000.

Compared to the mean scan time difference of a known bag registration method of about 74.1603 of Figure 2 (and its corresponding mean overlap of 99.999 of Figure 3), the mean scan time difference afforded by an embodiment of the invention of about 2.77986 of Figure 6 (and its corresponding mean overlap of about 96.9257 of Figure 7) demonstrates a significant reduction of scan time.

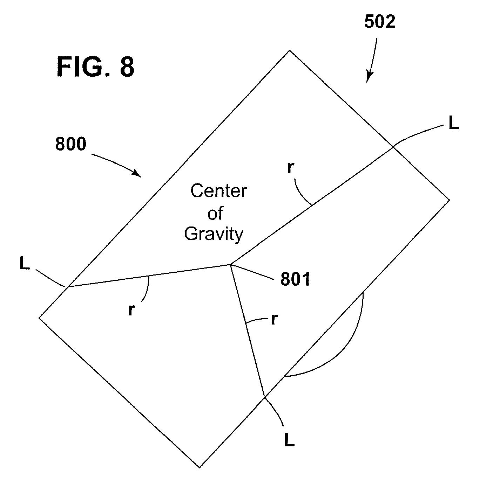

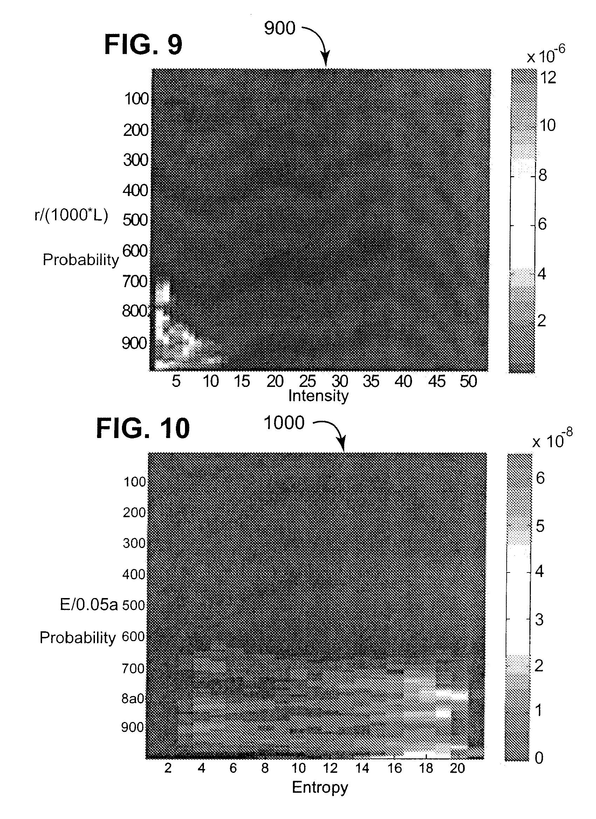

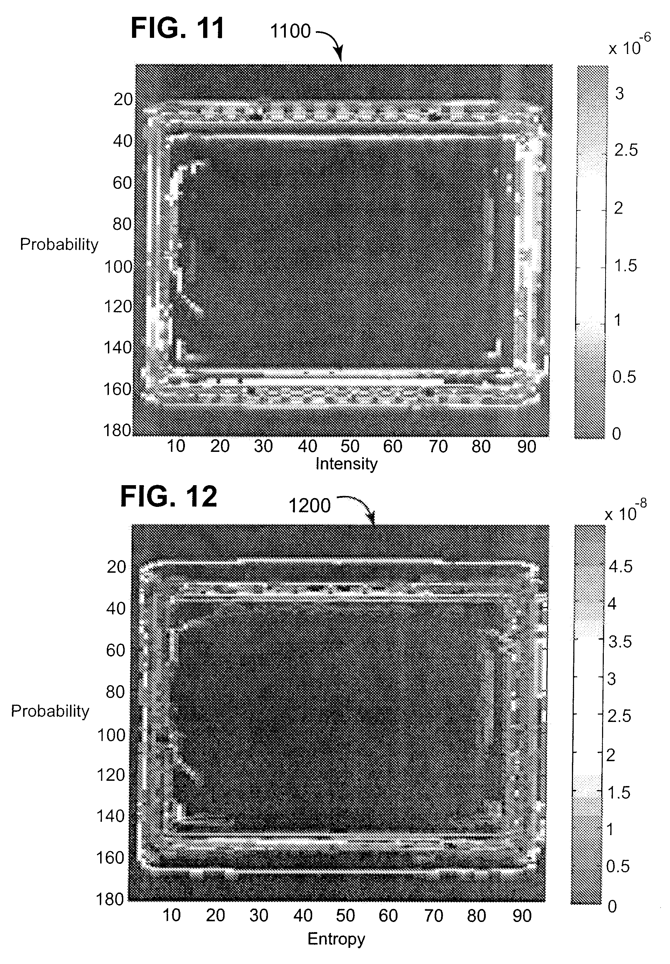

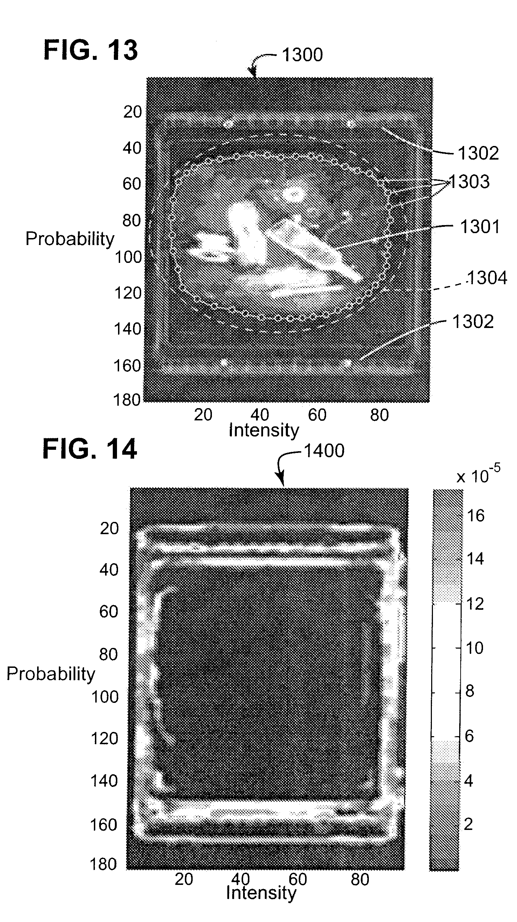

Figure 8 is a diagram illustrating a reference frame 800 for a statistical model used in a method provided by an embodiment of the invention. Figure 9 is a "ground truth" histogram 900 showing exemplary statistical intensity values extracted from a test set of five tubs, according to an embodiment of the invention. Figure 10 is a "ground truthl" histogram 1000 that complements the "ground truth" histogram of Figure 9 and shows exemplary statistical entropy values extracted from the test set of five tubs, according to an embodiment of the invention. Figure 11 is a "real" histogram 1100 showing exemplary statistical intensity values extracted from a "real" x-ray bag image shown in Figure 13, according to an embodiment of the invention. Figure 12 is a "real" histogram 1200 that complements the histogram of Figure 11 and shows exemplary statistical entropy values extracted from the "real" x-ray bag image, according to an embodiment of the invention. Figure 13 is a "real" x-ray image 1300 of a bag inside a tub, according to an embodiment of the invention. Figure 14 is a "real" histogram 1400 illustrating exemplary probabilities of each pixel in the x-ray image 1300 of Figure 13 being a "tub pixel," according to an embodiment of the invention.

Referring to Figures 8, 9, 10, 11, 12, 13, and 14, an embodiment of the invention includes creating a statistical model based on an x-ray image of a particular type of tub 1302. It will be appreciated that use of two or more different types of tubs will require development of a separate statistical "ground truth" model for each type of tub. Creation of a statistical model may be accomplished by inserting a predetermined number of empty tubs into an explosive detection system, such as the YXLON 3500™ brand explosive detection system manufactured by the General Electric Company of Schenectady, New York, and x-ray scanning the empty tubs to obtain a corresponding number of x-ray images. These "tub" x-ray images may be processed using the reference frame described below to extract a contour of the tub, and to obtain one or more statistical model histograms indicating the intensity and entropy probability distributions of the "tub" pixels in the "tub" x-ray images.

Referring to Figure 8, in an embodiment of the invention, the statistical "ground truth" model includes a reference frame 800 having a center of origin at a center-of-gravity 801 of all the tub contour points L. Within this reference frame 800, "r" is a ray originating at the center-of-gravity of all contour points of a tub 502, and "L" is a contour point at which the ray terminates. In an embodiment, each of the one or more rays has a normalized coordinate in a range from 0 to 1.

The plurality of x-ray images may be computer-processed to obtain intensity values "I" and entropy values "E" for each image pixel. The computer processing may include following each ray 802 from the center-of-gravity 801 of the tub contour to each tub contour point 803, and storing the observed intensity "I" and entropy "E" values in a histogram. Using one or more probabilistic equations of the type known to a skilled artisan, such as Bayes' rule, probability distributions "P(I)Tub, r/L" for the intensity values "I" and probability distributions "P(E)Tub, r/L" for the entropy values "E" may be extracted. (See Figure 9, which shows the probabilistic intensity distributions of five "ground truth" images, and Figure 10, which shows the probabilistic entropy distributions of five "ground truth" images). The intensity probability distribution data and entropy probability distribution data may then be used to create one or more histograms 900,1000 that comprise the "ground truth" statistical model. These "ground truth" histograms 900,1000 may be normalized by a controller and stored in a computer-readable medium.

When a bag 1301 resting in a tub 1302 is inserted into an explosive detection system configured according to an embodiment of the invention, a "real" image 1300 is obtained to determine the bag contour data 1304. In the case of a failure, the bag 1301 is marked as "no scan," and/or the whole tub 1302 including the bag 1301 is re-scanned and/or checked by hand.

In an embodiment, the "real" bag contour data 1304 is determined by calculating probability distributions "P(I)Tub, r/L" for the intensity values "I" and probability distributions "P(E)Tub, r/L" for the entropy values "E" of each pixel of the "real" image. (See Figures 11 and 12). The "real" intensity and entropy probability distribution data may then be used to create one or more "real image" histograms 1100,1200. Based on a comparison of these one or more "real image" histograms 1100, 1200 with the one or more previously stored "ground truth" histograms 900,1000, the "tub" pixels can be extracted (e.g., subtracted) from the "real" image 1300. The "bag" pixels remaining in the "real" image 1300 may undergo some computerized spatial analysis. The convex hull of the "bag" pixels that results from completion of the computerized spatial analysis is the scan volume. In an embodiment, the locations of the "bag" pixels may be used to restrict a subsequent x-ray scan (and/or threat detection analysis) to the bag's scan volume.

Embodiments of the invention may be protected from rotations of the tub 1302 by using a polar coordinate system. Additionally, computer analysis may be performed on a sub-sampled image (e.g., about 4 mm resolution instead of about 1 mm resolution) to be less sensitive against perspective changes. In addition, statistical interpretation may distinguish different aspects of the image of the tub 1301. Thus, one can extract from a given "real" image pixel its likelihood to be a "tub" or a "bag" pixel based on its probabilistic intensity and local entropy values. This is illustrated by the "real" histogram 1400 of Figure 14, which displays the exemplary probabilities of each pixel in a "real" image 1300 being a "tub" pixel.

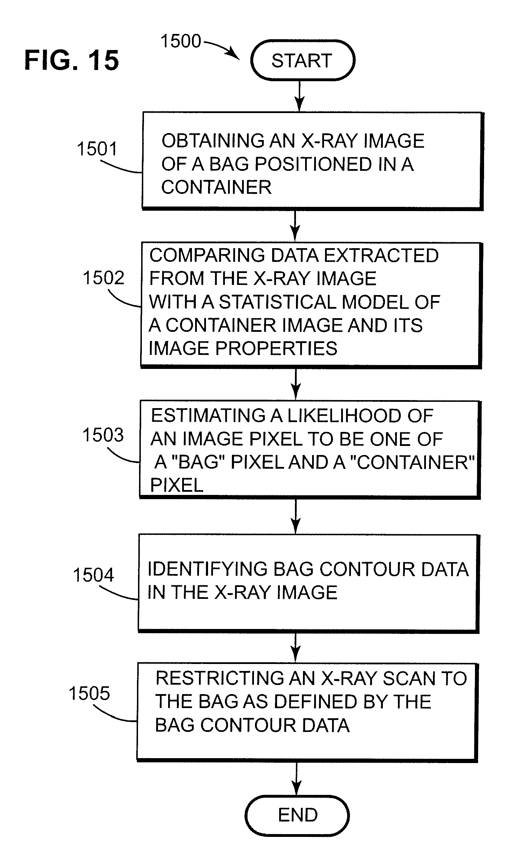

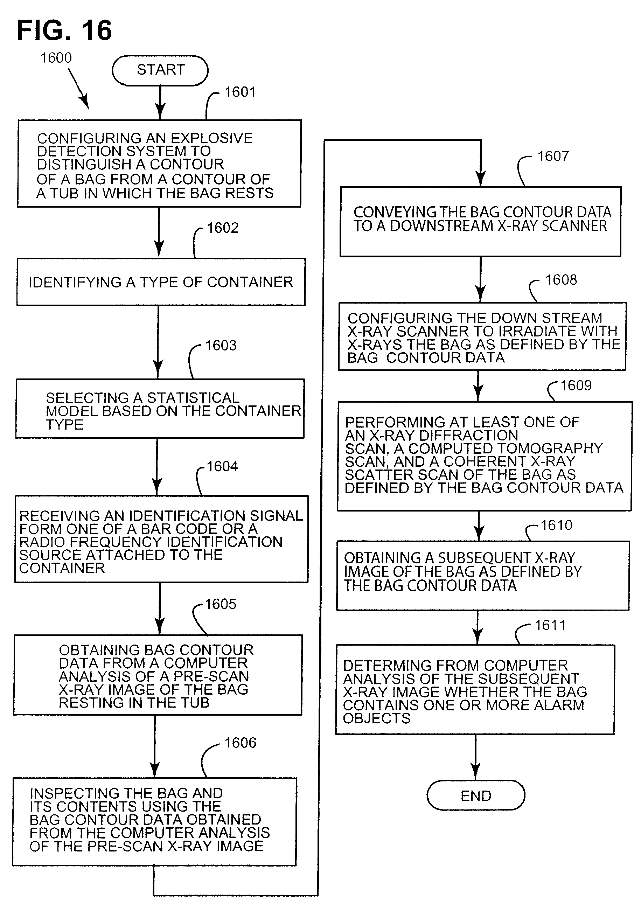

Figure 15 is a flowchart of a method provided by an embodiment of the invention. Figure 16 is a flowchart of a method provided by another embodiment of the invention. One or more steps of the Figure 15 method and/or the Figure 16 method may be implemented in a microprocessor and associated memory elements within a computer, for example, within an explosive detection system. In such an embodiment the Figure 15 steps and Figure 16 steps represent a program stored in the memory element and operable in the microprocessor. When implemented in a microprocessor, program code configures the microprocessor to create logical and arithmetic operations to process the flow chart steps. Embodiments of the invention may also be embodied in the form of computer program code written in any of the known computer languages containing instructions embodied in tangible media such as floppy diskettes, CD-ROM's, hard drives, DVD's, removable media or any other computer-readable storage medium. Embodiments of the invention can also be embodied in the form of a computer program code, for example, whether stored in a storage medium loaded into and/or executed by a computer or transmitted over a transmission medium, such as over electrical wiring or cabling, through fiber optics, or via electro-magnetic radiation. When the program code is loaded into and executed by a general purpose or a special purpose computer, the computer becomes an apparatus for practicing one or more embodiments of the invention.

Referring to Figure 15, a method 1500 of improving throughput (e.g., bags per hour) of an explosive detection system may include a step of obtaining an ("real") x-ray image of a bag positioned in a container (e.g., a tub) (block 1501). The method 1500 may further include a step of comparing data extracted from the x-ray image with a statistical model of a container image and its image properties (block 1502). The image properties may include the intensity and entropy data and/or the intensity and entropy probability distributions discussed above. The method 1500 may further include a step of estimating a likelihood of an image pixel to be one of a "bag" pixel and a "container" pixel (block 1503). The method 1500 may yet further include a step of identifying bag contour data in the x-ray image (block 1504). In an embodiment, the bag contour data is extracted by calculating the probabilistic intensity and entropy values for each pixel of the x-ray image. These values, which may optionally be used to form one or more histograms, are then compared to probabilistic intensity and entropy values in one or more predetermined "ground truth" histograms. Pixels of the x-ray image whose probabilistic intensity and/or entropy values match the probabilistic intensity and/or entropy values of "ground truth" "bag" pixels or "tub"pixels are deemed to be "bag" pixels or "tub" pixels, respectively. The bag contour points forming the bag contour data may then be selected at the interface of "bag" pixels and "tub" pixels. The method 1500 may further include a step of restricting an x-ray scan to the bag as defined by the bag contour data (block 1505). Thereafter, the method 1500 may end.

Referring to Figure 16, a method 1600 of improving throughput of an explosive detection system may include a step of configuring an explosive detection system to distinguish a contour of a bag from a contour of a tub in which the bag rests (block 1601). In an embodiment, the explosive detection system may be configured by loading one or more "ground truth" histograms of probabilities of intensity and entropy for "bag" pixels and "tub" pixels into a computer readable memory associated with the explosive detection system. As previously mentioned, the "ground truth" x-ray image used to construct the one or more "ground truth" histograms that form a particular statistical model can be obtained from scanning one or more bags in containers. If a set of bags in containers is used, average probabilities of intensity and entropy for each pixel may be used. In an embodiment, a set comprises two or more x-ray images of a bag in a container. In another embodiment, a "ground truth image" may be constructed from test x-ray images of bags and containers that are scanned separately.

The method 1600 may further include a step of identifying a type of container (block 1602). The method 1600 may also include a step of selecting a statistical model, comprising one or more "ground truth" histograms as described above, based on the container type (block 1603). The method step represented by block 1602 may comprise receiving an identification signal from one of a barcode and a radio frequency identification (RFID) source attached to the container (block 1604).

The method 1600 may further include a step of obtaining bag contour data from a computer analysis of a pre-scan x-ray image of the bag resting in the tub (block 1605). The method 1600 may yet further include a step of inspecting the bag and its contents using the bag contour data obtained from the computer analysis of the pre-scan x-ray image (block 1606). The method 1600 may further include a step of conveying (or sharing) the bag contour data to a downstream x-ray scanner (e.g., main x-ray scanner) (block 1607). The method 1600 may further include a step of configuring the downstream x-ray scanner to irradiate with x-rays the bag as defined by the bag contour data (block 1608). The method 1600 may further include a step of performing at least one of an x-ray diffraction scan, a computed tomography scan, and a coherent x-ray scatter scan of bag as defined by the bag contour data (block 1609). The method 1600 may further include a step of obtaining a subsequent x-ray image of the bag as defined by the bag contour data (block 1610). The method 1600 may further include a step of determining from computer analysis of the subsequent x-ray image whether the bag comprises and/or contains one or more alarm objects (block 1611). Thereafter, the method 1600 may end.

It is understood that the steps of methods 1500 and 1600 may be performed in any suitable order, and that methods 1500 and 1600 may additionally include one or more steps other than those enumerated herein. Additionally, an embodiment of the invention may calculate and compare probabilities of intensity and entropy for one or more voxels.

A detailed description of various embodiments of the claimed invention has been provided; however, modifications within the scope of the claimed invention will be apparent to persons having ordinary skill in the above-referenced technological field. Such persons will appreciate that features described with respect to one embodiment may be applied to other embodiments. Thus, the scope of the claimed invention is to be properly construed with reference to the following claims.

## Claims

1. A method, comprising:
configuring (1601) an explosive detection system to distinguish a contour of a bag from a contour of a tub in which the bag rests; and
obtaining (1605) bag contour data (1304) from a computer analysis of a pre-scan x-ray image (1300) of the bag resting in the tub.

2. The method of claim 1, further comprising:
inspecting (1606) the bag and its contents using the bag contour data obtained from the computer analysis of the pre-scan x-ray image (1300).

3. The method of claim 2, wherein the step of inspecting the bag and its contents comprises:
conveying (1607) the bag contour data (1304) to a downstream x-ray scanner;
configuring (1608) the downstream x-ray scanner to irradiate with x-rays the bag as defined by the bag contour data (1304); and
performing (1609) at least one of a x-ray diffraction scan, a computed tomography scan, and a coherent x-ray scatter scan of the bag as defined by the bag contour data (1304).

4. A method of operating an explosive detection system, the method comprising:
obtaining (1501) an x-ray image (1300) of a bag and a container, wherein a portion of the bag rests in the container;
comparing (1502) data extracted from the x-ray image (1300) with a statistical model of a container image and its image properties; and
estimating (1503) a likelihood (1400) of a pixel of the x-ray image to be one of a "bag" pixel and a "container" pixel.

5. The method of claim 4, further comprising:
identifying (1504) bag contour data (1304) in the x-ray image; and
restricting (1505) a subsequent x-ray scan of the bag and the container to the bag as defined by the bag contour data.

6. The method of claim 4, wherein the step of obtaining an x-ray image comprises storing the x-ray image (1300) in a computer-readable medium.

7. The method of claim 4, wherein the step of comparing the x-ray image (1300) comprises retrieving the statistical model from a computer-readable medium.

8. The method of claim 5, wherein the step of restricting a subsequent x-ray scan comprises subtracting one or more "container" pixels from the x-ray image (1300).

9. The method of claim 4, wherein the bag contour data (1304) comprises a scan volume, and wherein the scan volume comprises one or more contour points (803).

10. The method of any one of claims 4 to 9, wherein the statistical model comprises a reference frame (800) that has a center of origin (801) positioned at a center-of-gravity of all the one or more contour points (803).

11. The method of claim 4, wherein the statistical model comprises a first histogram (900) resulting from a calculation of a specific value of intensity at a specific position within the bag contour data, and a second histogram (1000) resulting from a calculation of entropy at the specific position within the bag contour data.

12. The method of claim 4, wherein the statistical model comprises a reference frame (800) that includes one or more contour points (803) defined by the bag contour data (1304) and one or more rays (802),
wherein each ray (802) originates at a center of origin (801) of the reference frame (800) and terminates at a contour point of the one or more contour points (803), and
wherein the center of origin (801) is positioned at a center-of gravity of all the one or more contour points (803).

13. The method of claim 12, wherein the step of estimating a likelihood comprises:
following each ray (802) from the center-of-origin (803) to its corresponding contour point of the one or more contour points (803), and
inputting a calculated specific value of intensity and a specific value of entropy for the contour point of the one or more contour points (803) in one or more histograms (900, 1000).

14. The method of claim 13, wherein the step of estimating a likelihood further comprises:
normalizing the one or more histograms (900, 1000); and
storing the one or more normalized histograms (900, 1000) in a computer-readable medium.

15. The method of claim 4, further comprising:
identifying (1602) a type of the container; and
selecting (1603) the statistical model based on the identification of the container type.

16. The method of claim 15, wherein the step of identifying a type of container comprises:
receiving (1604) an identification signal from one of a barcode and an RFID source attached to the container.

17. The method of claim 4, further comprising:
obtaining (1610) a subsequent x-ray image of the bag as defined by the bag contour data; and
determining (1611) from computer analysis of the subsequent x-ray image whether the bag comprises and/or contains one or more alarm objects.
